# FASCICULE DE BREVET EUROPEEN

(11) **EP 0 785 685 B1**
(45) Date de publication et mention de la délivrance du brevet: **17.07.2002**
(21) Numéro de dépôt: 97460002.5
(22) Date de dépôt: 09.01.1997
(51) Int. Cl.: H04N 7/14

(54) **Appareil de télécommunication sonore et visuelle, tel qu'un système de visiophonie**
Audio- und Videonachrichtenübertragungsgerät, wie z.B. ein Bildfernsprechsystem
Audio and video telecommunication apparatus such as a videophone system

(30) Priorité: 16.01.1996 FR 9600633
(43) Date de publication de la demande: 23.07.1997
(73) Titulaire: FRANCE TELECOM, 75015 Paris (FR)
(72) Inventeur: Buchner, Georges, 75012 Paris (FR); Morin, Thérèse, 75006 Paris (FR); Isckia, Alain, 94499 Vitry sur Seine (FR)
(74) Mandataire: Maillet, Alain

(56) Documents cités:
- EP-A- 0 500 463
- WO-A-95/01058
- FR-A- 2 530 394
- PATENT ABSTRACTS OF JAPAN vol. 17, no. 695 (E-1480), 20 décembre 1993 & JP 05 236472 A (KOSUTEMU KK), 10 septembre 1993,
- PATENT ABSTRACTS OF JAPAN vol. 18, no. 652 (E-1642), 12 décembre 1994 & JP 06 253298 A (MATSUSHITA ELECTRIC IND CO LTD), 9 septembre 1994,
- PATENT ABSTRACTS OF JAPAN vol. 18, no. 275 (E-1553), 25 mai 1994 & JP 06 046413 A (HITACHI LTD), 18 février 1994,
- PATENT ABSTRACTS OF JAPAN vol. 14, no. 200 (E-0920), 24 avril 1990 & JP 02 041083 A (NEC HOME ELECTRON LTD), 9 février 1990,

## Description

La présente invention concerne un appareil de télécommunication sonore et visuelle destiné à constituer un terminal visiophonique. Un tel appareil est généralement utilisé dans un système de visiophonie ou de visioconférence.

On notera que, dans la suite de la description, on appellera système visiophonique, aussi bien un système de visiophonie classique où deux terminaux peuvent échanger des données d'images et de sons qu'un système de visioconférence où le nombre de terminaux impliqués lors d'une communication est supérieur à deux..

On connaît déjà des systèmes de visiophonie, par exemple celui qui est décrit dans le document de brevet FR-A-2 673 060. Un tel système est généralement constitué d'un terminal équipé d'une interface de communication reliée à une ligne téléphonique ou autre, d'une caméra et d'une unité de restitution pourvue d'un écran sur lequel il est possible d'afficher l'image du locuteur situé devant la caméra et le locuteur éloigné.

L'un des freins actuel au développement important de systèmes de visiophonie est le coût du terminal qui est principalement grevé par le prix de l'unité de restitution laquelle est généralement pourvue d'un écran à cristal liquide.

Par ailleurs, la plupart des foyers sont équipés d'un récepteur de télévision généralement en couleurs. Ce type d'appareil est devenu banal et est un article de consommation courante vendu à un prix relativement abordable. Certains foyers ont même plusieurs récepteurs de télévision par raison de commodité.

On peut constater qu'aujourd'hui, la visualisation des programmes de télévision, que ce soit par le câble ou par voie hertzienne, privé ou public, n'est plus le seul centre d'intérêts de cet appareil et que d'autres usages se sont développés et vont se développer encore. En effet, par l'intermédiaire de la prise de péritélévision, l'écran du récepteur de télévision permet de visualiser les images provenant de sources diverses, telles que des magnétoscopes, des lecteurs de disques optiques vidéo, des caméras vidéo portatives, telles qu'un Caméscope^{(R)}. On peut également citer dans ce sens l'utilisation par un public jeune (et moins jeune aussi) de jeux vidéo interactifs.

Le récepteur de télévision devient donc un appareil qui est utilisé comme un moniteur avec son écran et son haut-parleur, indépendamment de son modulateur VHF et/ou UHF et prend donc un autre usage que celui pour lequel il a été conçu.

C'est en partant de ces constatations que le présent demandeur a mis au point un appareil de télécommunication sonore et visuelle qui permette d'utiliser l'écran de visualisation d'un récepteur de télévision. La grande majorité des foyers possédant aujourd'hui un tel appareil, le coût de l'écran de visualisation devient ainsi marginal dans le coût du système de visiophonie.

On notera que, dans la présente description, les appareils de télécommunication sonore et visuelle dont il s'agit sont des appareils fonctionnant en temps réel.

Le but de l'invention est donc de prévoir un tel appareil de télécommunication sonore et visuelle qui soit temps réel et qui soit de structure telle que, d'une part, l'ensemble des fonctions disponibles du système de visiophonie soit accessible par la télécommande qui généralement équipe les récepteurs de télévision ou par l'organe de commande du module téléphonique de l'appareil de visiophonie, comme par exemple le clavier d'un combiné téléphonique et, d'autre part, la visualisation de ces fonctions se fasse sur l'écran sans perturber le fonctionnement normal du récepteur.

On connaît, notamment d'après le document de brevet JP-A-5 236 472, un appareil de télécommunication sonore et visuelle qui est du type comprenant un terminal visiophonique prévu pour être connecté à un réseau de télécommunication, une unité de traitement d'images, encore appelé contrôleur de sortie, prévue pour, d'une part, recevoir les signaux d'images et de sons issus dudit terminal visiophonique et, d'autre part, traiter lesdits signaux afin de pouvoir composer une image avec sons, selon divers modes proposés et de transmettre des signaux représentatifs de ladite image composée à l'organe de restitution d'un récepteur de télévision.

Dans cet appareil, le récepteur de télévision est du type qui permet l'incrustation d'images afin de pouvoir, à partir de deux images, l'une issue d'une source extérieure au récepteur, l'autre issue du récepteur lui-même, composer une image composée qui sera affichée sur un écran.

Le but de l'invention est de prévoir un appareil du type qui est décrit dans le document de brevet susmentionné qui permette l'utilisation d'un récepteur de télévision pour lequel la fonction d'incrustation n'est pas prévue. En particulier, il est de prévoir un appareil de télécommunication sonore et visuelle destiné à constituer un terminal de visiophonie qui est équipé de moyens qui permettent d'atteindre ce but.

L'object de l'invention est défini en revendication 1.

Le signal de télévision diffusé issu du récepteur de télévision est soit le signal vidéofréquence composite démodulé ou le signal vidéofréquence composite modulé UHF ou VHF issu ou présent dans ledit récepteur de télévision.

Selon une autre caractéristique de l'invention, l'unité de traitement d'image est prévue pour recevoir et traiter les signaux d'images et de sons d'au moins une source vidéo externe, telle qu'une caméra, par exemple portable.

Selon une autre caractéristique de l'invention, il comporte un ensemble graphique qui est constitué d'un générateur de caractères et/ou d'icônes et d'un module d'interfaces graphiques et qui est prévu pour délivrer, sous la commande de ladite unité de commande, des signaux de textes, d'icônes, et/ou de graphiques à ladite unité d'images, cette dernière utilisant lesdits signaux pour composer ladite image qui est transmise à l'organe de restitution dudit récepteur de télévision.

Selon une autre caractéristique de l'invention, il comporte une unité de commande prévue pour recevoir les signaux de commande émis par une télécommande et pour, lors de l'appui sur une touche ou sur une combinaison de touches de ladite télécommande, transmettre des signaux de commande, d'une part, par l'intermédiaire d'une liaison sans fil, audit récepteur de télévision, et, d'autre part, à ladite unité d'images et audit système visiophonique.

Selon une autre caractéristique de l'invention, ladite liaison sans fil est la liaison de télécommande standard dudit récepteur de télévision, ladite unité assurant une conversion du protocole de ladite télécommande vers le protocole de ladite liaison sans fil.

Selon une autre caractéristique de l'invention, un combiné téléphonique est relié à ladite unité de commande, ladite unité de commande étant alors prévue pour que l'appui sur une touche ou une combinaison de touches dudit combiné puisse commander soit ledit récepteur de télévision, soit l'unité d'images, soit le système visiophonique. Ledit combiné téléphonique peut être un combiné sans fil.

De même, ladite source vidéo et de sons externe est une caméra portable, telle que celle qui équipe un Camescope^{(R)}.

Selon une autre caractéristique de l'invention, il comporte un générateur vocal.

Selon une autre caractéristique de l'invention, il comporte un système de reconnaissance vocale permettant à l'utilisateur de commander vocalement l'unité de commande.

Selon une autre caractéristique de l'invention, il est monté à l'intérieur même dudit récepteur de télévision.

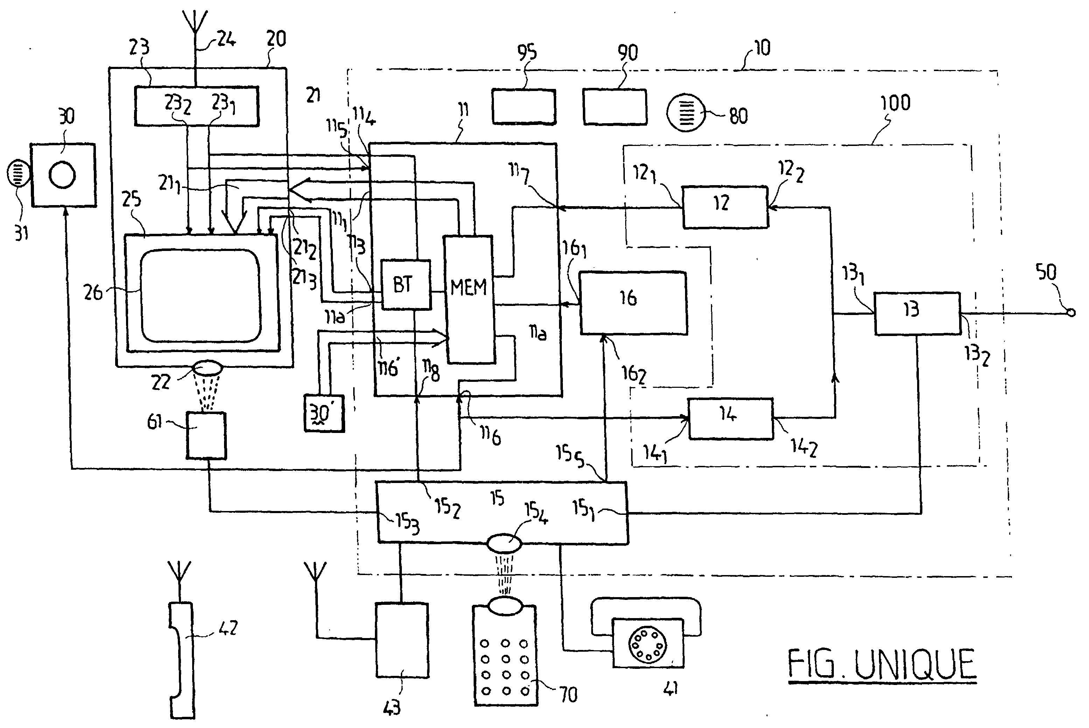

Les caractéristiques de l'invention mentionnées ci-dessus, ainsi que d'autres, apparaîtront plus clairement à la lecture de la description suivante d'un exemple de réalisation faite en relation avec le dessin joint dans lequel la Fig. unique est un schéma synoptique d'un appareil de télécommunication sonore et visuelle selon l'invention

A la Fig. unique, on voit un appareil de télécommunication sonore et visuelle 10 selon l'invention qui est destiné à constituer un terminal visiophonique. Il est relié à un récepteur de télévision 20 par l'intermédiaire de sa prise péritélévision 21, et également à une source vidéo et sonore externe, telle qu'une caméra de télévision 30 qui pourrait par exemple être constituée de la caméra qui équipe une caméra vidéo portative, telle qu'un Caméscope^{(R)} Avantageusement, la caméra 30 est pourvue d'un microphone 31. Il est encore relié à un combiné téléphonique qui peut être soit un combiné fixe 41 et dans ce cas il est relié par un cordon, soit un combiné sans fil 42 et dans ce cas il possède une base 43 avec son antenne.

Il est encore relié à un émetteur infrarouge 61 qui est prévu pour émettre au moyen de rayonnements infrarouges des messages de commande en direction d'un capteur infrarouge 22 du récepteur de télévision 20. Ces messages de commande sont par exemple destinés aux commandes de changement de chaîne, de réglage d'intensité sonore, de contraste d'image ou de saturation de couleurs du récepteur de télévision 20.

L'appareil de télécommunication 10 est également prévu, comme on le verra dans la suite de la description, pour recevoir des messages de commande d'une télécommande 70. Cette télécommande 70 peut être la télécommande standard qui équipe normalement le récepteur de télévision 20 et dans ce cas les messages qu'elle émet peuvent directement commander, lorsqu'ils sont reçus par le capteur 22, les fonctions du récepteur 20. Mais elle peut être d'un autre type et dans ce cas, l'appareil 10 effectue les conversions nécessaires pour la commande, via l'émetteur infrarouge 61, des différentes fonctions du récepteur de télévision 20.

Classiquement, le récepteur de télévision 20 est constitué d'une partie de réception proprement dite 23 reliée à une antenne appropriée 24 qui reçoit et démodule les signaux de télévision télédiffusés UHF ou VHF et délivre, sur ses sorties 23₁ et 23₂, respectivement un signal vidéo composite démodulé et un signal de son démodulé. Ces derniers signaux sont fournis à une unité de restitution 25 qui est normalement pourvue d'un écran, généralement mais pas nécessairement, un écran cathodique 26.

La prise de péritélévision 21 sort le signal vidéo composite démodulé ainsi que le signal de son également démodulé. Elle est pourvue d'un bus d'entrée 21₁ pour recevoir des signaux de couleurs primaires dits signaux RVB et de deux entrées 21₂ et 21₃ pour l'entrée de signaux de commutation respectivement lente et rapide. Les signaux de commutation et les signaux RVB sont fournis aux entrées correspondantes de l'unité de restitution 25. Les signaux de commutation lente permettent une commutation d'une trame de l'image alors que les signaux de commutation rapide permettent une commutation d'un pixel de l'image.

L'appareil 10 comprend une unité d'images 11 qui est pourvue d'une sortie 11₁ pour la transmission, par la prise de péritélévision 21, de signaux d'images du type RVB au récepteur de télévision 20 et des sorties 11₂ et 11₃ pour respectivement délivrer des signaux de commutation lente et rapide au récepteur de télévision 20, également par la prise de péritélévision 21.

L'unité d'images 11 comprend encore une entrée 11₄ sur laquelle le récepteur de télévision 20 lui délivre, par la prise de péritélévision 21, un signal vidéo composite démodulé, par exemple au format SECAM, PAL ou NSTC selon le récepteur utilisé. Ce signal vidéo composite est constitué, outre des signaux de luminance et de chrominance, des signaux de synchronisation ligne et de synchronisation trame. Il comporte encore une entrée 11₅ sur laquelle le récepteur de télévision 20 lui délivre, également par la prise de péritélévision 21, un signal de son, qui peut être stéréophonique ou pas, de haute-fidélité ou pas.

L'unité d'images 11 est encore pourvue d'une entrée 11₆ sur laquelle est directement connectée la sortie vidéo composite ou les signaux de couleurs RVB de la source vidéo et sonore externe 30.

On notera que l'unité d'images 11 pourrait comporter plusieurs entrées pour recevoir des signaux vidéo composite et/ou des signaux RVB, telles que l'entrée 11₆' à laquelle est reliée, par un bus pouvant véhiculer des signaux RVB, une source 30', telle qu'un magnétoscope.

L'appareil de télécommunication 10 est relié à au moins un réseau 50 support de télécommunication qui peut être un réseau téléphonique commuté, un réseau ATM, un réseau numérique à intégration de service dit réseau RNIS, un réseau local d'entreprise RLE, un réseau utilisant le protocole TCP/IP, etc.

Il comprend pour ce faire un décodeur 12 qui délivre sur sa sortie 12₁ des signaux d'images et de sons qui sont fournis sur une entrée 11₇ de l'unité d'images 11. L'entrée 12₂ du décodeur 12 est reliée à l'entrée/sortie 13₁ d'une interface d'adaptation 13 dont l'entrée 13₂ est reliée à la ligne de télécommunication 50. Le décodeur 12 décode les signaux d'images numériques issus de l'interface 13 pour les délivrer dans un format qui est compatible avec l'unité d'images 11.

L'appareil de télécommunication 10 comprend encore un codeur 14 dont l'entrée 141 reçoit les signaux d'images issus de la caméra 30 et dont la sortie 14₂ délivre des signaux à l'entrée/sortie 13₁ de l'interface 13. Le codeur 14 code les signaux issus de la caméra 30 pour les délivrer dans un format qui est compatible avec le réseau de télécommunication 50

Le décodeur 12 et le codeur 14 ainsi que l'interface 13 forment ensemble un élément 100 qui est appelé, dans le domaine de la technique, une interface de communication visiophonique. On notera que l'interface visiophonique utilisée (décodeur 12/codeur 14/interface 13) est prévue, selon le type de réseau auquel il accède, pour respecter les normes ITU H.320 ou H.324 ou bien d'autres standards. On notera encore que cette interface de visiophonie 100 pourrait être extérieure au boîtier de l'appareil de télécommunication 10.

L'appareil de télécommunication 10 comprend encore une unité de commande 15 dont une entrée/sortie 15₁ est reliée, par une liaison bidirectionnelle, à une entrée/sortie de commande 13₃ de l'interface 13, dont une seconde sortie 15₂ est reliée à une entrée 11₈ de l'unité d'images 11 et dont une troisième sortie 15₃ est reliée à un émetteur infrarouge 61. L'unité de commande 15 comporte un récepteur infrarouge 15₄ qui est destiné à recevoir les signaux optiques infrarouges émis par une télécommande 70.

L'appareil de télécommunication 10 comprend encore un ensemble 16 constitué d'un générateur de caractères et d'icônes associé à un module d'interfaces graphiques dont la sortie 16₁ est reliée à une entrée 11₉ de l'unité d'images 11 et dont une entrée de commande 16₂ est reliée à une sortie 15₅ de l'unité de commande 15.

On entend ici par icône toute une iconographie qui prend en compte les barres de dialogue, les icônes proprement dites, les boîtes de dialogue, les "boutons", etc. Comme on le verra par la suite, cette iconographie offre une assistance pour dialoguer/commander/piloter en une même présentation cohérente pour la compréhension de l'utilisateur. Ce dialogue est affiché sous forme appropriée sur le récepteur de télévision 20 en incrustant les icônes dans l'image affichée sur le récepteur de télévision 20.

L'unité d'images 11 est, dans le mode de réalisation représenté, constituée d'une base de temps BT et d'une mémoire d'images MEM. La base de temps BT reçoit le signal vidéo composite démodulé présent sur l'entrée 11₄ dont elle extrait les signaux de synchronisation ligne et trame de l'image affichée sur l'écran du récepteur de télévision 20. La base de temps est reliée à la mémoire MEM pour lui délivrer des signaux de lecture et d'écriture, et ce en synchronisme avec les signaux de synchronisation ligne et trame. La mémoire MEM est prévue pour stocker les signaux d'images qui sont respectivement issus du décodeur 12, du générateur de caractères et d'icônes 16 et de la caméra 30 Elle est également prévue pour délivrer les signaux d'images stockés sur la sortie 11₁ de manière à permettre l'affichage des images correspondantes sur l'écran du récepteur de télévision 20. La base de temps est également reliée aux sorties 11₂ et 11₃ pour commuter entre l'affichage sur l'écran du récepteur de télévision 20 des signaux d'images issus en interne du récepteur lui-même et l'affichage des signaux d'images issus de la mémoire MEM.

Il est ainsi possible d'incruster, dans l'image normalement affichée sur l'écran du récepteur 30, par exemple une image diffusée, soit l'image issue du décodeur 12, soit de la caméra 30, soit du générateur 16, soit plusieurs de ces images. Il est également possible d'afficher l'image issue de la caméra 30 dans laquelle sont incrustées, soit l'image issue du décodeur 12, soit l'image issue du générateur 16, soit les deux réunies.

L'appareil 10 comprend encore un générateur de messages sonores et vocaux 90 qui est prévu pour délivrer ces messages, sous la commande de l'unité 15, au récepteur de télévision 20.

Il comprend encore un système de reconnaissance vocale 95 qui reconnaît les messages de commande vocaux de l'utilisateur et qui commande l'appareil 10, en particulier l'unité de commande 15, en conséquence.

Le fonctionnement de l'appareil de télécommunication sonore et visuelle de l'invention est le suivant.

Considérons d'abord le cas d'un appel extérieur.

Les signaux d'appel reçus sur la ligne 50 sont transmis à l'entrée/sortie 15₁ de l'unité de commande 15. Soit automatiquement après réception d'un certain nombre de signaux d'appels, soit par l'émission d'un signal infrarouge par la télécommande 70 reçu par le récepteur 15₄ de l'unité de commande 15, l'unité 15 commande l'interface 13 pour établir la connexion.

Les signaux d'images et de sons sur la ligne 50 sont alors transmis sur le décodeur 12 qui délivre à l'entrée 11₇ de l'unité 11 les signaux d'images et de sons au format désiré. Ces signaux d'images représentent par exemple le visage du locuteur éloigné alors que les signaux de sons représentent sa voix.

L'unité de commande 15 commande également l'unité d'images 11 de manière à commander l'affichage des images issues du décodeur 12 et de la caméra 30 sur l'écran du récepteur 20, soit, comme on l'a vu précédemment, en incrustation dans les images diffusées, soit les images issues du décodeur 12 en incrustation dans l'image issue de la caméra 30.

L'unité 15 commande également le générateur 16 de manière à ce qu'il délivre, à l'unité d'images 11, une image d'information se présentant, soit sous la forme d'un texte, soit sous la forme d'une icône et donnant à l'utilisateur des informations sur la communication en cours, sur les fonctions accessibles à ce moment là, etc.

On notera que l'information d'appel entrant devra pouvoir être indiquée simultanément sous trois formes ou de façon distincte: affichage d'un message de service sur l'écran du récepteur de télévision 20, émission d'un message vocal, déclenchement de la sonnerie du combiné téléphonique 41 ou 42. L'utilisateur sera alors averti du type d'appel téléphonique ou visiophonique.

On notera qu'il pourra limiter la communication à la seule voie audio.

Considérons maintenant le cas de l'utilisateur qui appelle un correspondant.

En appuyant sur les touches de la télécommande 70, il transmet à l'unité 15 un message de commande, ce qui a pour effet de commander l'interface 13 de manière qu'elle puisse effectuer la numérotation et établir la connexion. L'unité 15 commande également le générateur 16 et l'unité 11 de manière à pouvoir afficher sur l'écran du récepteur 20 les textes et/ou les icônes servant au suivi de la procédure.

Cette procédure d'appel peut également être réalisée à l'aide du combiné téléphonique 41 ou du combiné 42.

Dès le décroché, les messages de service apparaîtront soit sur l'écran du récepteur de télévision 20, soit sous forme de messages vocaux émis par le générateur 90 et guideront l'utilisateur jusqu'au terme de l'appel.

Après avoir composé le numéro de téléphone du correspondant, l'ensemble des tonalités utilisées en téléphonie sera reconstitué pour permettre à l'utilisateur de suivre l'évolution de l'appel, ces signaux de tonalité ou les messages étant propres à la région ou au pays.

Une fois la connexion établie, les signaux d'images issus de la caméra 30 sont transmis au codeur 14 puis, via l'interface 13, sur le réseau 50. Comme précédemment, l'unité de commande 15 commande l'unité d'images 11 de manière à commander l'affichage des images issues du décodeur 12 et de la caméra 30 sur l'écran du récepteur 20, soit, comme on l'a vu précédemment, en incrustation dans les images diffusées, soit les images issues du décodeur 12 en incrustation dans l'image issue de la caméra 30.

En dehors ou pendant les communications, l'émetteur 61 est commandé par l'unité 15 de manière à retranscrire les signaux qui sont reçus par le capteur 15₄ de la télécommande 70 et qui concernent la commande du récepteur de télévision 20. Eventuellement, plusieurs émetteurs 61 peuvent être prévus de manière à se trouver chacun devant un appareil différent, tel qu'un magnétoscope, Camescope, etc. Dans ce cas, l'unité de commande 15 effectue les éventuelles conversions de protocole de commande.

On notera que les commandes effectuées par la télécommande 70 pourraient l'être également par le combiné 41 ou le combiné 42, à condition d'une conversion appropriée dans l'unité de commande 15 ou d'une modification appropriée de la base 43. Pour ce faire, l'unité de commande 15 affecte au fur et à mesure du dialogue chaque touche du pavé numérique de l'un ou l'autre combiné à une fonction télévisuelle ou une fonction de l'interface de visiophonie 100. Ainsi, du poste téléphonique 41 ou 42, l'utilisateur peut accéder à certaines fonctions du récepteur de télévision, telles que le changement de chaînes, le réglage du contraste, de la saturation des couleurs, etc

Pendant toutes les procédures, le dialogue entre l'appareil de télécommunication 10 et son utilisateur est affiché sur l'écran du récepteur de télévision 20 Il utilise la télécommande 70 ou l'un des combinés 41 ou 42 dont les touches peuvent être reconfigurées par programmation ou bien en affectant certaines touches à des actions différenciées.

Le son issu du décodeur 12 est retransmis directement au récepteur de télévision 20 Quant au son émis par l'utilisateur, il peut être capté, soit par le microphone 31 qui équipe la caméra 30, soit par le microphone de l'un des deux combinés 41 ou 42, soit encore par un microphone 80 qui équipe l'appareil de télécommunication 10 A l'instar du son issu du décodeur 12, ce son est transmis directement au récepteur de télévision 20.

Comme on vient de le voir, la télécommande 70 permet d'accéder aux fonctions du récepteur de télévision et aux fonctions visiophoniques de l'interface de visiophonie 100. Parmi celles-ci, on peut citer l'ensemble des possibilités offertes à ce jour sur les terminaux visiophoniques:
- Passage mode mains libres/combiné,
- Réglage des niveaux sonores en mode mains libres,
- Secret son et secret vidéo,
- Contrôle vidéo,
- Prise de main à distance pour des applications de télésurveillance,
- télécommandes de modules situés sur le visiophone distant, par exemple cadrage de la caméra, etc.

L'appareil de télécommunication selon l'invention peut être pourvu de moyens de mesure du niveau de luminosité et, si ce niveau est suffisant, il peut agir sur un éclairage d'appoint pour le rétablir à un niveau acceptable prédéfini. Ce niveau peut également être ajusté par la télécommande 70.

On notera que selon des modes de réalisation qui entrent dans le cadre de la présente invention, l'appareil de télécommunication 10 décrit ci-dessus pourrait se trouver placé à l'intérieur du boîtier du récepteur de télévision 20 et que ce n'est qu'à titre d'illustration qu'il a été représenté et décrit distinct du récepteur 20.

De même, dans le mode de réalisation décrit, l'appareil de télécommunication 10 est relié à la prise péritélévision 21 du récepteur 20. On comprendra que l'unité d'images 11 pourrait recevoir les mêmes signaux sans passer par l'intermédiaire de la prise de péritélévision.

Par ailleurs, selon un mode de réalisation alternatif, l'unité d'images 11 reçoit directement les signaux de télévision modulés UHF ou VHF issus ou présents dans le récepteur de télévision 20, les démodule et les traite afin d'en extraire les signaux de synchronisation qui sont ensuite délivrés à la base de temps BT.

## Revendications

1. Appareil de télécommunication sonore et visuelle (10) comprenant une interface de communication visiophonique (100) prévue pour être connectée à un réseau de télécommunication (50), une unité de traitement d'images (11) prévue pour, d'une part, recevoir les signaux d'images et de sons issus d'un terminal visiophonique et, d'autre part, traiter lesdits signaux afin de pouvoir composer une image avec sons et de transmettre des signaux représentatifs de ladite image composée à l'organe de restitution d'un récepteur de télévision (20), **caractérisé en ce que** ladite unité d'images (11) comprend, d'une part, une mémoire d'images (MEM) dans laquelle sont stockés, sous forme numérique, les signaux d'images reçus de l'interface de communication visiophonique (100) et, d'autre part, une base de temps (BT) prévue pour recevoir le signal vidéo composite issu du récepteur de télévision (20) et en extraire les signaux de synchronisation ligne et trame, ladite base de temps (BT) commandant, en synchronisme avec lesdits signaux de synchronisation, la lecture de ladite mémoire (MEM) et la commutation lente ou rapide dudit récepteur de télévision (20) de manière à former, sur l'écran dudit récepteur (20), l'image composée.

2. Appareil selon la revendication 1, **caractérisé en ce que** le signal de télévision issu du récepteur de télévision (20) est le signal vidéofréquence composite démodulé.

3. Appareil selon la revendication 1, **caractérisé en ce que** le signal de télévision issu du récepteur de télévision (20) est le signal vidéofréquence composite modulé UHF ou VHF issu ou présent dans ledit récepteur de télévision (20).

4. Appareil selon une des revendications précédentes, **caractérisé en ce que** l'unité de traitement d'image (11) est prévue pour recevoir et traiter les signaux d'images et de sons d'au moins une source vidéo externe, telle qu'une caméra, par exemple portable.

5. Appareil selon une des revendications précédentes, **caractérisé en ce qu'**il comporte un ensemble graphique (16) qui est constitué d'un générateur de caractères et/ou d'icônes et d'un module d'interfaces graphiques et qui est prévu pour délivrer, sous la commande de ladite unité de commande (15), des signaux de textes, d'icônes, et/ou de graphiques à ladite unité d'images (11), cette dernière utilisant lesdits signaux pour composer ladite image qui est transmise à l'organe de restitution dudit récepteur de télévision.

6. Appareil de télécommunication selon une des revendications précédentes, **caractérisé en ce qu'**il comporte une unité de commande (15) prévue pour recevoir les signaux de commande émis par une télécommande (70) et pour, lors de l'appui sur une touche ou sur une combinaison de touches de ladite télécommande (20), transmettre des signaux de commande, d'une part, par l'intermédiaire d'une liaison sans fil (61, 22), audit récepteur de télévision (20), et, d'autre part, à ladite unité d'images (11) et audit système visiophonique (100).

7. Appareil de télécommunication selon la revendication 6, **caractérisé en ce que** ladite liaison sans fil (61, 22) est la liaison de télécommande standard dudit récepteur de télévision (20), ladite unité (15) assurant une conversion du protocole de ladite télécommande (70) vers le protocole de ladite liaison sans fil (61, 22).

8. Appareil de télécommunication selon une des revendications précédentes, **caractérisé en ce qu'**un combiné téléphonique est reliable à ladite unité de commande (15), ladite unité de commande (15) étant alors prévue pour que l'appui sur une touche ou une combinaison de touches dudit combiné (41, 42, 43) puisse commander soit ledit récepteur de télévision (20), soit l'unité d'images (11), soit le système visiophonique (100).

9. Appareil selon la revendication 8, **caractérisé en ce que** ledit combiné téléphonique est un combiné sans fil.

10. Appareil selon une des revendications précédentes, **caractérisé en ce que** ladite source vidéo externe est une caméra portable, telle que celle qui équipe un Camescope^{(R)}.

11. Appareil selon une des revendications précédentes, **caractérisé en ce qu'**il comporte un générateur vocal (90).

12. Appareil selon une des revendications précédentes, **caractérisé en ce qu'**il comporte un système de reconnaissance vocal (95) permettant à l'utilisateur de commander vocalement l'unité de commande (15).

13. Appareil selon une des revendications précédentes, **caractérisé en ce qu'**il est adapté à étre monté à l'intérieur même dudit récepteur de télévision (20).

## Patentansprüche

1. Bildfernsprech-Audio- und Videonachrichtenübertragungsgerät (10) mit einer Kommunikationsschnittstelle (100), die dazu vorgesehen ist, an ein Fernmeldenetz (50) angeschlossen zu werden, mit einer Videoverarbeitungseinheit (11), die dazu geeignet ist, einerseits die Video- und Audiosignale aus einem Bildfernsprechterminal zu empfangen und, andererseits, diese Signale zu verarbeiten, um ein Bild mit Ton zusammenstellen zu können, und die die das zusammengesetzte Bild darstellenden Signale an das Wiedergabeorgan eines Fernsehempfängers (20) überträgt, **dadurch gekennzeichnet, dass** die Videoeinheit (11) einerseits einen Bildspeicher (MEM) umfasst, in dem in digitaler Form die Signale der von der Bildfernsprech-Kommunikationsschnittstelle (100) empfangenen Signale gespeichert sind, und, andererseits, eine Zeitbasis (BT), die dazu geeignet ist, das Videosignalgemisch aus dem Fernsehempfänger (20) zu empfangen und daraus die Zeilen- und Rahmengleichlaufsignale zu extrahieren, wobei die Zeitbasis (BT) in Gleichlauf mit den Gleichlaufsignalen das Lesen des Speichers (MEM) sowie die langsame oder schnelle Umschaltung des Fernsehempfängers (20) steuert, so dass auf dem Bildschirm des Fernsehempfängers (20) das zusammengesetzte Bild gebildet wird.

2. Gerät nach Anspruch 1, **dadurch gekennzeichnet, dass** das aus dem Fernsehempfänger (20) stammende Signal das demodulierte Videosignalgemisch ist.

3. Gerät nach Anspruch 1, **dadurch gekennzeichnet, dass** das Fernsehsignal aus dem Fernsehempfänger (20) das modulierte UHF- oder VHF-Videosignalgemisch ist, das aus dem Fernesehempfänger (20) stammt oder in ihm präsent ist.

4. Gerät nach einem der vorhergehenden Ansprüche, **dadurch gekennzeichnet, dass** die Videoverarbeitungseinheit (11) dazu geeignet ist, Video- und Audiosignale von mindestens einer externen Videoquelle zu empfangen und zu verarbeiten, wie zum Beispiel von einer Kamera, zum Beispiel einer tragbaren Kamera.

5. Gerät nach einem der vorhergehenden Ansprüche, **dadurch gekennzeichnet, dass** es eine grafische Einheit (16) umfasst, die aus einem Zeichen- und/oder Symbolgenerator und einem Modul grafischer Schnittstellen besteht, das dazu geeignet ist, unter Steuerung durch die Steuereinheit (15) Text-, Symbol- und/oder grafische Signale an die Videoeinheit (11) zu liefern, wobei letztere diese Signale dazu verwendet, das Bild zusammenzustellen, das an das Wiedergabeorgan des Fernsehempfängers übertragen wird.

6. Audio- und Videonachrichtenübertragungsgerät nach einem der vorhergehenden Ansprüche, **dadurch gekennzeichnet, dass** es eine Steuereinheit (15) umfasst, die dazu geeignet ist, die von einer Fernbedienung (70) abgegebenen Signale zu empfangen, um dann, wenn auf eine Taste oder eine Tastenkombination auf der Fernbedienung (70) gedrückt wird, Steuersignale einerseits über eine drahtlose Verbindung (61, 22) an den Fernsehempfänger (20) zu übertragen, und, andererseits, an die Videoeinheit (11) und an das Bildfernsprechsystem (100).

7. Audio- und Videonachrichtenübertragungsgerät nach Anspruch 6, **dadurch gekennzeichnet, dass** die drahtlose Verbindung (61, 22) eine Standard-Fernbedienungsverbindung des Fernsehempfängers (20) ist, wobei die Einheit (15) eine Umwandlung des Protokolls der Fernbedienung (70) in das Protokoll der drahtlosen Verbindung (61, 22) sicherstellt.

8. Audio- und Videonachrichtenübertragungsgerät nach einem der vorhergehenden Ansprüche, **dadurch gekennzeichnet, dass** ein Telefongerät an die Steuereinheit (15) angeschlossen werden kann, wobei die Steuereinheit (15) dazu geeignet ist, dass ein Druck auf eine Taste oder auf eine Kombination von Tasten des Telefongeräts (41, 42, 43) entweder den Fernsehempfänger (20) steuern kann, oder die Videoeinheit (11) oder das Bildfernsprechsystem (100).

9. Gerät nach Anspruch 8, **dadurch gekennzeichnet, dass** das Telefongerät ein schnurloses Gerät ist.

10. Gerät nach einem der vorhergehenden Ansprüche, **dadurch gekennzeichnet, dass** die externe Videoquelle eine tragbare Kamera ist, wie zum Beispiel die eines Camescopes®.

11. Gerät nach einem der vorhergehenden Ansprüche, **dadurch gekennzeichnet, dass** es einen Sprachgenerator (90) umfasst.

12. Gerät nach einem der vorhergehenden Ansprüche, **dadurch gekennzeichnet, dass** es ein Spracherkennungssystem (95) umfasst, das es dem Benutzer erlaubt, die Steuereinheit (15) vokal zu steuern.

13. Gerät nach einem der vorhergehenden Ansprüche, **dadurch gekennzeichnet, dass** es dazu geeignet ist, im Inneren des Fernsehempfängers (20) montiert zu werden.

## Claims

1. Apparatus for sound and visual telecommunication (10), comprising a videophonic communication interface (100) provided for connection to a telecommunication network (50), an image processing unit (11) provided on the one hand to receive the sound and image signals emitted by a videophonic terminal and on the other hand to process the said signals in order to be able to compose an image with sounds and to transmit signals representative of the said composed image to the restoration device of a television receiver (20), **characterised in that** the said image processing unit (11) comprises on the one hand an image memory (MEM) in which are stored, in numerical form, the image signals received from the videophonic communication interface (100), and on the other hand a time base (BT) provided to receive the composite video signal emitted by the television receiver (20) and to extract therefrom the X-synchronisation and frame synchronisation signals, the said time base (BT) controlling, in synchronism with the said synchronisation signals, the reading of the said memory (MEM) and the slow or rapid switching of the said television receiver (20) in such a manner as to form, on the screen of the said receiver (20), the composed image.

2. Apparatus according to claim 1, **characterised in that** the television signal emitted by the television receiver (20) is the demodulated composite videofrequency signal.

3. Apparatus according to claim 1, **characterised in that** the television signal emitted by the television receiver (20) is the modulated composite UHF or VHF videofrequency signal emitted or present in the said television receiver (20).

4. Apparatus according to one of the previous claims, **characterised in that** the image processing unit (11) is provided to receive and process the image and sound signals from at least one external video source, such as a camera, hand-held for example.

5. Apparatus according to one of the previous claims, **characterised in that** it comprises a graphic unit (16) which is formed from a generator of characters and/or icons and a graphic interface module and which is provided to deliver, under the control of the said control unit (15), text, icon and/or graphic signals to the said image unit (11), this latter using the said signals to compose the said image which is transmitted to the restoration unit of the said television receiver.

6. Telecommunication apparatus according to one of the previous claims, **characterised in that** it comprises a control unit (15) provided to receive the control signals emitted by a remote control (70) and, when a key or combination of keys of the said remote control (20) are pressed, to transmit control signals, on the one hand by means of a cordless link (61, 22) to the said television receiver (20), and on the other hand to the said image unit (11) and to the said videophonic system (100).

7. Telecommunication apparatus according to claim 6, **characterised in that** the said cordless link (61, 22) is the standard remote control link of the said television receiver (20), the said unit (15) effecting a conversion of the protocol of the said remote control (70) to the protocol of the said cordless link (61, 22).

8. Telecommunication apparatus according to one of the previous claims, **characterised in that** a telephone handset is connectable to the said control unit (15), the said control unit (15) then being provided so that pressing a key or a combination of keys of the said handset (41, 42, 43) can control either the said television receiver (20), the image unit (11), or the videophonic system (100).

9. Apparatus according to claim 8, **characterised in that** the said telephone handset is a cordless handset.

10. Apparatus according to one of the previous claims, **characterised in that** the said external video source is a hand-held camera such as that fitted to a Camescope®.

11. Apparatus according to one of the previous claims, **characterised in that** it comprises a voice generator (90).

12. Apparatus according to one of the previous claims, **characterised in that** it comprises a voice recognition system (95) allowing the user to control the control unit (15) vocally.

13. Apparatus according to one of the previous claims, **characterised in that** it is adapted for mounting to the actual interior of the said television receiver (20).
